(19) Europäisches Patentamt

European Patent Office

Office européen des brevets

(11) **EP 0 648 007 B1**

(12) **EUROPÄISCHE PATENTSCHRIFT**

(45) Veröffentlichungstag und Bekanntmachung des Hinweises auf die Patenterteilung:
**18.12.1996 Patentblatt 1996/51**

(51) Int Cl.[6]: **H02M 3/156**

(21) Anmeldenummer: **94114155.8**

(22) Anmeldetag: **08.09.1994**

(54) **Schaltungsanordnung zur Begrenzung der Ausgangsspannung eines getakteten Spannungsreglers**

Circuit arrangement for limiting the output voltage of a switching voltage regulator

Agencement de circuit pour limiter la tension de sortie d'un régulateur de tension par découpage

(84) Benannte Vertragsstaaten:
**DE FR GB IT**

(30) Priorität: **30.09.1993 DE 4333473**

(43) Veröffentlichungstag der Anmeldung:
**12.04.1995 Patentblatt 1995/15**

(73) Patentinhaber: **SIEMENS AKTIENGESELLSCHAFT 80333 München (DE)**

(72) Erfinder: **Blöckl, Reinhard, Dipl.-Ing. D-82008 Unterhaching (DE)**

(56) Entgegenhaltungen:
**EP-A- 0 345 624**

- **ELEKTRONIK, Bd.42, Nr.23, 16. November 1993 Seiten 86 - 89, XP414809 NELSON, LEMME 'Bessere Schaltnetzteile durch Leistungsfaktor-Korrektur'**

**Beschreibung**

Die Erfindung betrifft eine Schaltungsanordnung zur Begrenzung der Ausgangsspannung eines getakteten Spannungsreglers gemäß dem Oberbegriff des Anspruchs 1.

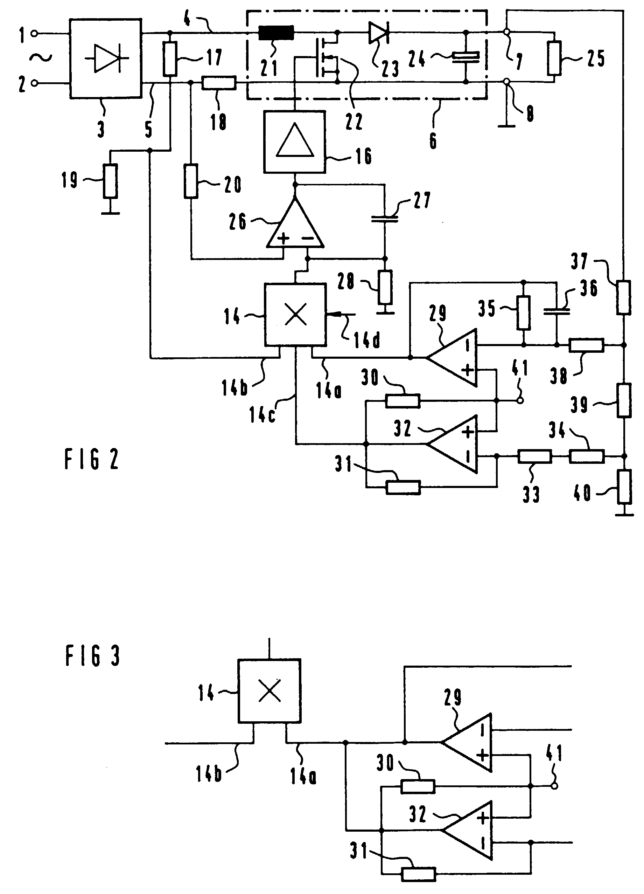

Eine derartige Anordnung ist z.B. aus Siemens Components 31 (1993), Heft 2, Seite 46ff bekannt. Figur 2 auf Seite 48 zeigt eine solche Regelstruktur mit einem Multiplizierer zwischen Spannungs- und Stromregler, wodurch dem Sollwert für den Strom die Kurvenform der Eingangsspannung aufgezwungen wird. Auf diese Weise ergibt sich für den aufgenommenen Netzstrom auch im Teillastbereich eine optimale Kurvenform, die auch dann noch erhalten bleibt, wenn der Scheitelwert der Eingangsspannung an die Ausgangsspannung heranreicht. Durch Verwendung einer derartigen Reglerstruktur ist eine Funktentstörung leicht erreichbar. Die Spannungsregelung muß jedoch langsam sein, um einen Leistungsfaktor möglichst nahe zu erhalten, wodurch am Ausgang dynamische Spannungs-Überschwinger auftreten, welche nachgeschaltete Bauelemente gefährden können. Ein Schaltung der gleichen Art is aus der europäischen Patentanmeldung EP-A-0 345 624 bekannt. Um diese Überspannung zu begrenzen kann z. B. ein einfacher Komparator vorgesehen sein, der bei Überspannung den Treiberausgang, d.h. die Ansteuerung des Stellelements digital abschaltet. Bei derartigen Reglern mit fester Arbeitsfrequenz greift eine solche digitale Überspannungsabschaltung jedoch völlig unsynchron sowohl, bezüglich der Arbeitsfrequenz, als auch der Netzfrequenz ein. Daraus resultiert durch Frequenzüberlagerung eine Verzerrung des Eingangsstroms mit hohem Oberwellenanteil, der auch nicht harmonische Anteile (bezüglich der Netzfrequenz) enthält. Damit wird sowohl das Ziel der sinusförmigen Stromaufnahme verfehlt, als auch durch Komponenten mit akustischer Abstrahlmöglichkeit, z.B. Ferritkerne, ein störendes Geräusch verursacht.

Aufgabe der vorliegenden Erfindung ist es, eine Schaltungsanordnung zur Begrenzung der Ausgangsspannung eines getakteten Spannungsreglers der vorgenannten Art anzugeben, der die vorgenannten Nachteile nicht aufweist.

Diese Aufgabe wird durch den kennzeichnenden Teil des Anspruchs 1 und 4 gelöst. Weiterbildungen sind Kennzeichen der Unteransprüche.

Vorteil der Anordnung ist, daß ein Überspannungskomparator durch einen Überspannungsverstärker ersetzt wird, der nicht digital die Ansteuerung des Stellelements abschaltet, sondern als linearer Regler die Amplitude des abgegebenen Stroms vermindert, bis die Überspannung am Ausgang abgebaut ist. Der Überspannungsregler arbeitet parallel zum eigentlichen Spannungsregler. Er greift aber erst bei Überspannung ein, dann aber wesentlich dynamisch schneller als der Spannungsregler.

Durch die erfindungsgemäße Anordnung werden nichtharmonische Frequenzanteile des Eingangsstrom vermieden und die harmonische Verzerrung des Eingangsstrom wird auf das absolut notwendigste Maß reduziert. Des weiteren tritt bei Ansprechen der Überspannungsbegrenzung keine Geräuschbildung auf.

Die Erfindung wird nachfolgend anhand von drei Figuren näher erläutert. Es zeigen

Figur 1    ein Blockschaltbild einer erfindungsgemäßen Anordnung,

Figur 2    ein Ausführungsbeispiel gemäß Figur 1,

Figur 3    eine Detailschaltbild einer weitere Ausführungsform der erfindungsgemäßen Anordnung.

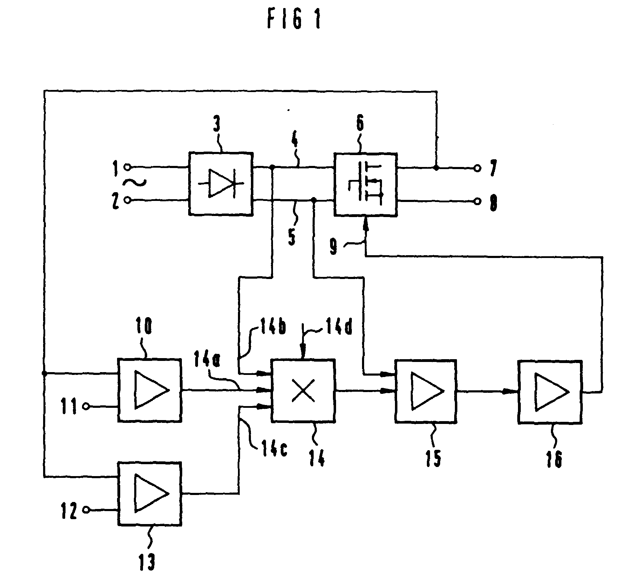

In Figur 1 sind mit 1 und 2 Eingangsklemmen bezeichnet, an denen eine Wechselspannung anlegbar ist. Diese sind mit einer Gleichrichtereinheit 3 verbunden, die Ausgangsleitungen 4 und 5 aufweist, an denen eine gleichgerichtete Spannung abgreifbar ist. Diese wird einer Stelleinheit 6 zugeführt. Der Ausgang der Stelleinheit 6 ist mit Anschlußklemmen 7 und 8 verbunden, an denen die geregelte Ausgangsspannung abgreifbar ist. Mit 9 ist der Steuereingang der Stelleinheit 6 bezeichnet. Die Ausgangsklemme 7 ist mit dem ersten Eingang eines Spannungsregelverstärkers 10 und mit dem ersten Eingang eines Überspannungsverstärkers 13 verschaltet. Der Spannungsregelverstärker 10 und der Überspannungsverstärker 13 weisen jeweils Eingangsanschlüsse 11 und 12 auf, an denen eine Referenzspannung anlegbar ist. Der Ausgang des Spannungsregelverstärkers 10 ist mit einem ersten Eingang 14a der Multipliziereinheit 14 verbunden. Der zweite Eingang 14b der Multipliziereinheit 14 ist mit der Leitung 4 verschaltet. Ein dritter Eingang 14c der Multipliziereinheit 14 ist mit dem Ausgang des Überspannungsverstärkers 13 verschaltet. Des weiteren kann ein zusätzlicher Eingang 14d der Multipliziereinheit 14 vorgesehen sein. Das Ausgangssignal der Multipliziereinheit 14 wird dem ersten Eingang eines Stromregelverstärkers 15 zugeführt. Der zweite Eingang des Stromregelverstärkers 15 ist mit der Leitung 5 verschaltet. Das Ausgangssignal des Stromregelverstärkers 15 wird einer Treiberstufe 16 zugeführt. Das Ausgangssignal der Treiberstufe 16 wird dem Steuereingang 9 der Stelleinheit 6 zugeführt.

Es hat sich gezeigt, daß sowohl der Schwellwert für die Aktivierung der Überspannungsbegrenzung als auch die Verstärkung mit der der Eingriff erfolgt, steuerbar bleiben müssen, um Anpassung an die Gegebenheiten der vorliegenden Regeleinheit zu gewährleisten.

Die Verarbeitung des Ausgangssignals des Überspannungsreglers 13 erfolgt mit einer Multiplikation mit dem Ausgangssignal des Spannungsregelverstärkers 10 durch die Multipliziereinheit 14. Dies ist notwendig, um den Eingriff der Überspannungsbegrenzung unabhängig vom zufälligen Spannungswert am Ausgang des Spannungsregelverstärkers 10 zu machen.

Nachfolgend wird anhand von Figur 2 ein Ausführungsbeispiel der erfindungsgemäßen Schaltungsanordnung beschrieben. Gleiche Bauelemente sind durch gleiche Bezugszeichen gekennzeichnet. Die mit 6 gekennzeichnete Stelleinheit enthält eine Induktivität 21, die einerseits mit der Leitung 4 und andererseits über eine Diode 23 in Flußrichtung mit der Ausgangsklemme 7 verbunden ist. Am Verbindungspunkt der Induktivität 21 und der Diode 23 ist mit dem Drainanschluß eines MOSFET 22 verbunden. Der Sourceanschluß des MOSFET 22 ist mit der Ausgangsklemme 8 verschaltet. Zwischen Ausgangsklemme 7 und Ausgangsklemme 8 ist eine Kapazität 24 geschaltet.

Diese Anordnung entspricht einer Stelleinheit 6 gemäß Bild 3 auf Seite 48 der in der Einleitung genannten Schrift. Zur Strommessung ist zwischen die Ausgangsklemme 8 und die Leitung 5 ein Widerstand 18 geschaltet. Am Ausgang zwischen den Klemmen 7 und 8 ist symbolisch eine Last 25 geschaltet. Die Leitung 4 ist über eine Reihenschaltung aus den Widerständen 17 und 19 mit Masse verbunden. Am Knotenpunkt der Reihenschaltung der beiden Widerstände 17 und 19 erfolgt ein Abgriff der mit dem ersten Eingang eines Multiplizierers 14 verbunden. Die Leitung 5 ist über einen Widerstand 20 mit dem positiven Eingang eines Operationsverstärkers 26 verbunden. Die Ausgangsklemme 7 ist über eine Reihenschaltung aus drei Widerständen 37, 39, 40 mit Masse verbunden, wobei der Widerstand 40 masseseitig geschaltet ist. Der Knotenpunkt der Reihenschaltung der Widerstände 37 und 39 ist über einen Widerstand 38 mit dem invertierenden Eingang eines Operationsverstärkers 29 verbunden. Dessen Ausgang ist über eine Parallelschaltung eines Widerstands 35 und einer Kapazität 36 mit dem invertierenden Eingang rückgekoppelt. Der positive Eingang des Operationsverstärkers 29 ist mit einer Klemme 41 verbunden, an der eine Referenzspannung zuführbar ist. Der Knotenpunkt des Widerstands 39 und 40 ist über die Reihenschaltung zweier Widerstände 33 und 34 mit dem invertierenden Eingang eines Operationsverstärkers 32 verbunden. Der positive Eingang des Operationsverstärker 32 ist ebenfalls mit der Eingangsklemme 41 verschaltet. Der Ausgang des Operationsverstärkers 32 ist einerseits über einen Widerstand 30 mit dem positiven Eingang und andererseits über einen Widerstand 31 mit dem invertierenden Eingang verschaltet. Des weiteren ist der Ausgang des Operationsverstärkers 32 mit einem zweiten Eingang eines Multiplizierers 14 verschaltet.

Der Ausgang des Operationsverstärkers 29 ist mit einem dritten Eingang des Multiplizierers 14 verbunden. Der Ausgang des Multiplizierers ist einerseits über einen Widerstand 28 mit Masse und andererseits mit dem invertierenden Eingang des Operationsverstärkers 26 verschaltet. Der Ausgang des Operationsverstärkers 26 ist über eine Kapazität 27 mit seinem invertierenden Eingang verbunden. Des weiteren ist der Ausgang des Operationsverstärkers 26 mit dem Eingang einer Treiberstufe 16 verbunden. Der Ausgang der Treiberstufe 16 ist mit dem Gateanschluß des MOSFET 22 verschaltet.

Der in Figur 1 dargestellte Spannungsregler (Boostkonverter) und die hier relevanten Teile der Steuer- und Regelschaltung sind in der Figur 2 gezeigt. Die Ausgangsspannung an der Ausgangsklemme 7 gelangt über den Widerstandsteiler 37, 39, 40 auf den als Spannungsregler dienenden Operationsverstärker 29, der mit einer großen Zeitkonstante, bestimmt durch den Widerstand 35 und die Kapazität 36, also langsam beschaltet ist. Das Verhältnis der Überspannungsschwelle zur Nennspannung ist mittels den Widerstanden 39 und 40 einstellbar.

Liegt eine Überspannung an, so senkt der Überspannungsregler, also der Operationsverstärker 32, welcher einen offenen Kollektorausgang aufweist, seine Ausgangsspannung ab und reduziert über den zweiten Multipliziereingang des Multiplizierers 14 das Ausgangssignal des Multiplizierers. Der Wert dieses Ausgangsstroms ergibt sich zu

$$I = \frac{k \cdot M2 \cdot (M3 - V_{Ref}) \cdot (M4 - 1V)}{W}$$

Die Größe M2 ist der Wert der Spannung an der Eingangsklemme 14b, die Größe M3 die Ausgangsspannungs des Operationsverstärkers 29 an der Eingangsklemme 14a, die Größe M4 die Ausgangsspannung des Operationsverstärkers 32 an der Klemme 14c. W stellt eine Größe dar, die an der vierten Eingangsklemme 14d des Mulitplizierers 14 anlegbar ist. Im oben dargestellten Beispiel kann der Multipliziereingang 14c eine Bezugsspannung von 1 Volt haben, wodurch $U_{cesat}$ des Ausgangsoperationsverstärkers 32 keine Rolle spielt.

Die Verstärkung des Operationsverstärkers 32 kann intern z.B. mit 30 festgelegt werden, kann aber auch durch den beispielsweise bei Integrierung extern vorgesehenem Widerstand 34 verkleinert, bzw. angepaßt werden. Wird dieser beispielsweise durch einen Kurzschluß ersetzt, so führt eine Überspannung von 2% über dem eingestellten Schwellwert zur Reduzierung des Multipliziererausgangsstroms I auf 0μA wodurch über den als Stromregler dienenden Operationsverstärker 26 sowie die Treiberstufe 16 der MOSFET 22 ganz abgeschaltet wird.

Erst wenn die Überspannung unter dem Schwellwert abgesunken ist, muß der als Spannungsregler dienende Operationsverstärker 29 die Regelung wieder übernehmen.

FIG 3 zeigt einen abgewandelten Ausschnitt der in FIG 2 dargestellten Schaltungsanordnung. In ihr sind nur die anders verschalteten Elemente dargestellt. Alle übrigen in FIG 3 nicht dargestellten Elemente entsprechen denen in FIG 2 gezeigten.

Gemäß FIG 3 kann der zusätzliche Eingang 14c des Multiplizierers 14 auch entfallen, wenn der Ausgang des Überspannungsverstärkers 32 mit dem Ausgang des Spannungsregelverstärkers 29 direkt verkoppelt wird. Dann begrenzt der Überspannungsverstärker 32 die Ausgangsspannung des Spannungsregelverstärkers.

**Patentansprüche**

1. Schaltungsanordnung zur Begrenzung der Ausgangsspannung eines getakteten Gleichspannungsreglers, wobei der getaktete Spannungsregler eine Stelleinheit (6), an deren Ausgang die Ausgangsspannung abgreifbar ist und dem die zu regelnde Gleichspannung zugeführt wird, einen ersten Spannungsregelverstärker (10), dem die Ausgangsspannung und eine Referenzspannung zugeführt wird, eine Multipliziereinheit (14), die das Ausgangssignal des Spannungsregelverstärkers (10) und ein aus der zu regelnden Gleichspannung gewonnenes Signal miteinander multipliziert, ein Stromregelverstärker (15), dem das Ausgangssignal des Mulitplizierers (14) und ein aus der zu regelnden Gleichspannung gewonnenes Signal zugeführt wird, sowie eine Treiberstufe (16) aufweist, die das Ausgangssignal des Stromregelverstärkers in ein Ansteuersignal für die Stelleinheit (6) wandelt, **dadurch gekennzeichnet**, daß ein Überspannungsverstärker (13) vorgesehen ist, der in Abhängigkeit von der Ausgangsspannung der Stelleinheit (6) ein Ausgangssignal erzeugt,

   - die Multipliziereinheit (14) das Ausgangssignal des Überspannungsverstärkers (13) mit den beiden anderen Eingangssignalen der Multipliziereinheit (14) multipliziert.

2. Schaltungsanordnung nach Anspruch 1, **dadurch gekennzeichnet**, daß der Überspannungsverstärker (13) einen rückgekoppelten Operationsverstärker (32) mit offenem Kollektorausgang aufweist, dessen einem Eingang die Ausgangsspannung und dessen anderen Eingang eine Referenzspannung zugeführt wird und dessen Ausgang mit der Multipliziereinheit (14) verbunden ist.

3. Schaltungsanordnung nach Anspruch 1 oder 2, **dadurch gekennzeichnet**, daß der Spannungsregelverstärker (10) einen Operationsverstärker (29) aufweist, dessen einem Eingang die Ausgangsspannung und dessen anderen Eingang eine Referenzspannung zugeführt wird, und zwischen dessen Ausgang und seinem invertierenden Eingang die Parallelschaltung eines Widerstands (35) und eines Kondensators (36) geschaltet ist.

4. Schaltungsanordnung zur Begrenzung der Ausgangsspannung eines getakteten Gleichspannungsreglers, wobei der getaktete Spannungsregler eine Stelleinheit (6), an deren Ausgang die Ausgangsspannung abgreifbar ist und dem die zu regelnde Gleichspannung zugeführt wird, einen ersten Spannungsregelverstärker (10), dem die Ausgangsspannung und eine Referenzspannung zugeführt wird, eine Multipliziereinheit (14), die das Ausgangssignal des Spannungsregelverstärkers (10) und ein aus der zu regelnden Gleichspannung gewonnenes Signal miteinander multipliziert, ein Stromregelverstärker (15), dem das Ausgangssignal des Mulitplizierers (14) und ein aus der zu regelnden Gleichspannung gewonnenes Signal zugeführt wird, sowie eine Treiberstufe (16) aufweist, die das Ausgangssignal des Stromregelverstärkers in ein Ansteuersignal für die Stelleinheit (6) wandelt, **dadurch gekennzeichnet**, daß ein Überspannungsverstärker (13) vorgesehen ist, der in Abhängigkeit von der Ausgangsspannung der Stelleinheit (6) ein Ausgangssignal erzeugt,

   - daß der Ausgang des Überspannungsverstärkers (13,32) mit dem Ausgang des Spannungsregelverstärkers (10,29) verbunden ist, so daß der Ausgangsspannungswert des Spannungsregelverstärkers (10,29) in seinem Spannungsmaximalwert begrenzt ist.

**Claims**

1. Circuit arrangement for limiting the output voltage of a clocked DC voltage regulator, the clocked voltage regulator having a control unit (6) at whose output the output voltage can be tapped and to which the DC voltage to be regulated is fed, a first voltage regulator amplifier (10) to which the output voltage and a reference voltage are fed, a multiplier unit (14) which multiplies by one another the output signal of the voltage regulator amplifier (10) and a signal obtained from the DC voltage to be regulated, a current regulator amplifier (15) to which the output signal of the multiplier (14) and a signal obtained from the DC voltage to be regulated are fed, and a driver stage (16) which converts the output signal of the current regulator amplifier into a trigger signal for the control unit (6), characterized in that one overvoltage amplifier (13) is provided which generates an output signal as a function of the output voltage of the control unit (6), and in that the multiplier unit (14) multiplies the output signal of the overvoltage amplifier (13) by the two other input signals of the multiplier unit (14).

2. Circuit arrangement according to Claim 1, characterized in that the overvoltage amplifier (13) has a feedback operational amplifier (32) having an open collector output, one input of which is fed the output voltage, and the other input of which is fed a reference voltage, and the output of which is connected to the multiplier unit (14).

3. Circuit arrangement according to Claim 1 or 2, characterized in that the voltage regulator amplifier (10) has an operational amplifier (29), one input of which is fed the output voltage, and the other input of which is fed a reference voltage, and between the output of which and its inverting input the parallel circuit of a resistor (35) and a capacitor (36) is connected.

4. Circuit arrangement for limiting the output voltage of a clocked DC voltage regulator, the clocked voltage regulator having a control unit (6) and whose output the output voltage can be tapped and to which the DC voltage to be regulated is fed, a first voltage regulator amplifier (10) to which the output voltage and a reference voltage are fed, a multiplier unit (14) which multiplies by one another the output signal of the voltage regulator amplifier (10) and a signal obtained from the DC voltage to be regulated, a current regulator amplifier (15) to which the output signal of the multiplier (14) and a signal obtained from the DC voltage to be regulated are fed, and a driver stage (16) which converts the output signal of the current regulator amplifier into a trigger signal for the control unit (6), characterized in that one overvoltage amplifier (13) is provided which generates an output signal as a function of the output voltage of the control unit (6), and in that the output of the overvoltage amplifier (13, 32) is connected to the output of the voltage regulator amplifier (10, 29) so that the output voltage value of the voltage regulator amplifier (10, 29) has a limited maximum voltage value.

**Revendications**

1. Montage pour la limitation de la tension de sortie d'un régulateur de tension continue par découpage, selon lequel le régulateur de tension par découpage comporte une unité de réglage (6), à la sortie de laquelle la tension de sortie peut être prélevée et à laquelle la tension continue à réguler est envoyée, un premier amplificateur de régulation de tension (10), auquel la tension de sortie et une tension de référence sont envoyées, un multiplicateur (14), qui multiplie l'un à l'autre le signal de sortie de l'amplificateur de régulation de tension (10) et un signal obtenu à partir de la tension continue à réguler, un amplificateur de régulation de courant (15), auquel le signal de sortie du multiplicateur (14) et un signal obtenu à partir de la tension continue à réguler sont envoyés, et un étage d'attaque (16), qui transforme le signal de sortie de l'amplificateur de régulation de courant en un signal de commande pour l'unité de réglage (6),

caractérisé par le fait qu'un amplificateur de surtension (13) est prévu, lequel produit en fonction de la tension de sortie de l'unité de réglage (6) un signal de sortie,

le multiplicateur (14) multiplie le signal de sortie de l'amplificateur de surtension (13) par les deux autres signaux d'entrée du multiplicateur (14).

2. Montage selon la revendication 1,

caractérisé par le fait que l'amplificateur de surtension (13) comporte un amplificateur opérationnel (32) qui est branché en rétroaction, qui a une sortie à collecteur ouverte, dont une entrée reçoit la tension de sortie, dont l'autre entrée reçoit une tension de référence et dont la sortie est reliée au multiplicateur (14).

3. Montage selon la revendication 1 ou 2,

caractérisé par le fait que l'amplificateur de régulation de tension (10) comporte un amplificateur opérationnel (29) dont une entrée reçoit la tension de sortie, dont l'autre entrée reçoit une tension de référence et un circuit parallèle formé par une résistance (35) et un condensateur (36) étant branché entre la sortie de cet amplificateur (29) et son entrée inverseuse.

4. Montage pour la limitation de la tension de sortie d'un régulateur de tension continue par découpage, selon lequel le régulateur de tension par découpage comporte une unité de réglage (6), à la sortie de laquelle la tension de sortie peut être prélevée et à laquelle la tension continue à réguler est envoyée, un premier amplificateur de régulation de tension (10), auquel la tension de sortie et une tension de référence sont envoyées, un multiplicateur (14), qui multiplie l'un à l'autre le signal de sortie de l'amplificateur de régulation de tension (10) et un signal obtenu à partir de la tension continue à réguler, un amplificateur de régulation de courant (15), auquel le signal de sortie du multiplicateur (14) et un signal obtenu à partir de la tension continue à réguler sont envoyés, et un étage d'attaque (16), qui transforme le signal de sortie de l'amplificateur de régulation de courant en un signal de commande pour l'unité de réglage (6),

caractérisé par le fait qu'un amplificateur de surtension (13) est prévu, lequel produit en fonction de la tension de sortie de l'unité de réglage (6) un signal de sortie,

la sortie de l'amplificateur de surtension (13, 32) est reliée à la sortie de l'amplificateur de régulation de tension (10, 29) de telle sorte que la valeur maximale de la tension de sortie de l'amplificateur de régulation de tension (10, 29) est limitée.

FIG 1

FIG 2

FIG 3